# EUROPEAN PATENT SPECIFICATION

(11) **EP 3 612 148 B1**
(45) Date of publication and mention of the grant of the patent: **27.03.2024**
(21) Application number: 18786975.5
(22) Date of filing: 20.04.2018
(51) Int. Cl.: A61H 31/00

(54) **COMPRESSION BELT ASSEMBLY FOR A CHEST COMPRESSION DEVICE**
KOMPRESSIONSRIEMENANORDNUNG FÜR EINE THORAXKOMPRESSIONSVORRICHTUNG
ENSEMBLE CEINTURE DE COMPRESSION DE DISPOSITIF DE COMPRESSION THORACIQUE

(30) Priority: 20.04.2017 US 201762488051 P; 30.03.2018 US 201815942292
(43) Date of publication of application: 26.02.2020
(60) Divisional application: 24158377.2
(73) Proprietor: Zoll Circulation, Inc., San Jose, CA 95131 (US)
(72) Inventor: JOSHI, Nikhil, S., San Jose CA 95131 (US); HARRIS, Melanie, L., San Jose CA 95131 (US); REYNOLDS, Byron, J., San Jose CA 95131 (US); LAWRENCE, David, T., San Jose CA 95131 (US); SMITH, Ian, San Jose CA 95131 (US); SEVERNS, Dean, W., San Jose CA 95131 (US)
(74) Representative: Potter Clarkson
(86) International application number: PCT/US2018/028533
(87) International publication number: WO 2018/195398

(56) References cited:
- WO-A1-00/27336
- CN-A- 106 344 384
- KR-A- 20170 028 578
- US-A- 5 960 523
- US-A- 6 090 056
- US-A1- 2005 080 362
- US-A1- 2005 080 364
- US-A1- 2008 255 481
- US-A1- 2012 130 290
- US-B1- 6 447 465
- US-B1- 6 599 258

## Description

### Field

The disclosure relates to the field of CPR chest compression devices.

### Background

Cardiopulmonary resuscitation (CPR) is a well-known and valuable method of first aid used to resuscitate people who have suffered from cardiac arrest. CPR requires repetitive chest compressions to squeeze the heart and the thoracic cavity to pump blood through the body. In efforts to provide better blood flow and increase the effectiveness of bystander resuscitation efforts, various mechanical devices have been proposed for performing CPR. In one type of mechanical chest compression device, a belt is placed around the patient's chest and the belt is used to effect chest compressions, for example our commercial device, sold under the trademark AUTOPULSE^{®}.

These devices have proven to be valuable alternatives to manual chest compression. The devices provide chest compressions at resuscitative rates and depths. A resuscitative rate may be any rate of compressions considered effective to induce blood flow in a cardiac arrest victim, typically 60 to 120 compressions per minute (the CPR Guidelines 2015 recommends 100 to 120 compressions per minute in adult victims), and a resuscitative depth may be any depth considered effective to induce blood flow, and typically 38 mm to 64 mm (1.5 to 2.5 inches) (the CPR Guidelines 2015 recommends 2 to 2.4 inches per compression in adults).

The AUTOPULSE^{®} chest compression device uses a belt, which is releasably attached to a drive spool with the housing of the device. In a convenient arrangement, a spline is secured to the belt, and the spline fits into a slot in the drive spool of the device. The drive spool is accessible from the bottom, or posterior aspect, of the device. Before use, a fresh belt is fitted to the device, and this requires lifting the device to insert the spline into the drive spool. The patient is then placed on the housing of the device, and the belt is secured over the chest of the patient. Opposite ends of the belt are held together, over the chest of the patient, with hook and loop fasteners. The arrangement has proven effective for treating cardiac arrest victims and convenient to use. However, belt installation may not always be convenient.

US2005080362A1 relates to devices and methods for attaching a belt cartridge to a belt drive platform. A spline attached to the belt is inserted into a slot in the drive spool of the belt drive platform. The cover plate of the belt cartridge fits into a channel beam in the housing of the belt drive platform, thereby securing the cartridge to the housing. Belt guards, for protecting the cartridge, belt drive platform, patient and rescuer, are rotatably attached to the cover plate and are secured around spindles disposed on the sides of the housing.

US2005080364A1 relates to a lightweight electro-mechanical chest compression device. The device is provided with a motor, a brake, a drive spool, a control system, and a metal channel beam to brace the device and guide a compression belt. The belt is provided in a belt cartridge that attaches to the channel beam. In use, the belt is secured around the patient and to the drive spool. The motor tightens the belt by turning the drive spool.

WO0027336A1 relates to a system for performing chest compression and abdominal compression for Cardiopulmonary Resuscitation. The system includes a motor and a gearbox including a system of clutches and brakes which allow for controlling and limiting the movement of compressing mechanisms operating on the chest and the abdomen of a patient.

US6090056A relates to a resuscitation device for automatic compression of victim's chest using a compression belt which exerts force evenly over the entire thoracic cavity. The belt is constricted and relaxed through a motorized spool assembly which repeatedly tightens the belt and relaxes the belt to provide repeated and rapid chest compression. An assembly includes various resuscitation devices including chest compression devices, defibrillation devices, and airway management devices, along with communications devices and senses with initiate communications with emergency medical personnel automatically upon use of the device.

CN1 06344384A relates to a compression belt installation structure special for a total thoracic cavity belt type automatic cardiac compression instrument.

### Summary

The invention is defined by the claims. In certain aspects of the disclosure, devices and methods are provided for a belt-driven chest compression device in which the compression belt is readily replaceable. The chest compression device includes a platform which houses drive components, and a compression belt which is connected to the drive components through releasably attachable couplings near the upper surface of the device. Removal and replacement of the belt may be accomplished while a patient is disposed on the housing. This arrangement helps avoid twisting of the belt and facilitates removal and replacement of the belt. The belt is tensioned upon installation by the control system that controls operation of the compression device. Also, the belt may be provided in an assembly including a liner sock, the belt, a guard slidably disposed on the belt, and/or an attachment feature or pin secured to the ends of the belt, while the housing of the device may include an aperture configured to securely receive the guard, and drive spools disposed within the housing, accessible through the apertures. Each drive spool may include a mating feature or slot for
receiving a pin. A flange disposed about each drive spool, movable or slidable along the drive spool, is operable to trap the pins in the slots to keep the belt secured to the drive spools during operation.

The compression belt assembly for use with the chest compression device comprises a compression belt, a guard slidably disposed on the compression belt, proximate the first end of the compression belt, and a sensor system component fixed to the guard. The attachment sensor or sensor system component is interoperable with a corresponding sensor or sensor system component disposed on the chest compression device housing, or with a control system used to control the chest compression device. The control system may be operable to receive signals from the sensor or sensor system component or a corresponding sensor or sensor system component disposed on the chest compression device housing to control the device based on the signals. For example, the control system may be programmed so that it will not operate to perform chest compressions unless signals indicative of proper placement of the machine guard are transmitted to the control system.

The chest compression device may also comprise a drive spool, having a first end and a second end and a motor operably connected to the belt through the drive shaft. The motor may be operably connected to the first end of the drive spool, and capable of operating the drive spool repeatedly to cause the belt to tighten about the thorax of the patient and loosen about the thorax of the patient. The drive spool may include a first spool portion having a longitudinally oriented first drive spool slot configured to receive a pin of a compression belt, and a first flange disposed proximate a first end of the spool portion. A compression belt may include a first pin secured to the belt, at the end of the belt, and extending transversely across the belt end. The first flange of the drive spool may be longitudinally translatable over the first spool portion, operable to translate to a first position along the first spool portion in which the slot is unobstructed by the flange and a second position in which the slot is partially obstructed by the flange, such that the pin is secured in the slot by the flange.

Several inventive embodiments are described below, and the various inventive features may be employed to achieve the benefits of those features in combination with other inventive features, or without combining them with other inventive features.

One such combination includes a compression belt assembly for use with a chest compression device, which comprises the compression belt, a guard slidably disposed on the compression belt, proximate a first end of the belt, along with a sensor component associated with the guard and configured to indicate attachment of the guard to the chest compression device. A liner sock may be disposed about the compression belt, and may be fixed to the guard. 02 The guard may be provided in many configurations, and may comprise a first portion having a slot for slidably engaging the belt and a second portion disposed at an angle to the first portion, with one or more fastener components for securing the guard to the compression device, and this may include a first fastener component for securing the first portion to the chest compression device, and a second fastener component for securing the second portion to the chest compression device. The guard may cover apertures in the chest compression device, including apertures disposed over the drive spool or spools, with the first fastener component securing the first portion over an aperture in a chest compression device, and the second fastener component securing the second portion over the aperture of a chest compression device. 04 In each of these configurations, the first fastener component may be configured as a fixed hinge component interoperable with a hinge component proximate the aperture of the chest compression device, and the second fastener component may be a flexible fastener component, interoperable with a fixed catch component proximate the aperture of the chest compression device. 05 Alternatively, in each of these configurations, the first component may be configured as a rigid cantilever with a lug interoperable with a first beam component proximate the aperture of the chest compression device, and the second fastener component may be configured as a deflectable cantilever with a lug, interoperable with a second beam component proximate the aperture of the chest compression device. 06 Alternatively, in each of these configurations, the first fastener component may be configured as a cantilever snap fit beam, and a second fastener second fastener component may be configured as a flexible fastener component, interoperable with a fixed catch component proximate the aperture of the chest compression device, or 10 the second portion may slidably engage an aperture in the compression device. In each of the preceding configurations, the first portion or second portion may have a slot for slidably engaging the belt, and the remaining portion may be disposed at an angle to the portion with the slot. In each of the preceding configurations, the first sensor component may be selected from a component of a magnetic sensor, a contact relay, a contact switch, a capacitive sensor, an inductive sensor, an optical sensor, and an ultrasonic sensor. In each of the preceding configurations, the first sensor component may be interoperable with a second sensor component disposed in a chest compression device. 09 In each of the preceding configurations, the compression belt may be configured for releasable attachment to the chest compression device, and the second sensor component may comprise a proximity sensor, and the first sensor component may comprise a proximity sensor target, wherein the proximity sensor sends a signal to a control system of the chest compression device indicating whether the proximity sensor target is detected, which indicates whether the guard is attached to the chest compression device, and wherein the control system controls operation of the compression belt in response to the absence or presence of the proximity sensor target. 11 The compression belt may comprise a pin configured to fit into a corresponding slot in the chest compression device, and may be secured to the belt first end and oriented transversely to the belt length, with length greater than the width of the compression belt.

Another such combination includes a compression belt assembly for use with a chest compression device, which comprises the compression belt, characterized by a length and a width, and a first end and a second end, and a longitudinal axis corresponding to the length of the belt, and a longitudinal edge on each side of the belt, and the guard slidably disposed on the compression belt, and a first sensor associated with the guard interoperable with a second sensor component disposed in a chest compression device for detection of attachment of the guard to the chest compression device. The compression belt may be configured for releasable attachment to the chest compression device. The first sensor component may be coupled to the guard. In each of the preceding configurations, the first sensor component may comprise a protrusion, which is interoperable with a second sensor component which is a contact switch disposed in the chest compression device. In each of the preceding configurations, the first sensor component may comprise a magnet, which is interoperable with a second sensor component which is a magnetic sensor disposed in the chest compression device. In each configuration with first and second sensor components, the first sensor component may be detectable by the second sensor component, and the second sensor component may be operable to send a signal to a control system of the chest compression device indicating whether the first sensor component is detected, which indicates whether the guard is attached to the chest compression device, and the control system may be operable to control operation of the compression belt in response to the absence or presence of the first sensor component. In each of the preceding configurations with a second sensor component, the second sensor component may comprise a proximity sensor and the first sensor component may comprise a proximity sensor target, wherein the proximity sensor sends a signal to a control system of the chest compression device indicating whether the proximity sensor target is detected indicating whether the guard is attached to the chest compression device, and the control system may be operable to control operation of the compression belt in response to the absence or presence of the proximity sensor target. In each of the preceding configurations with a second sensor component, the detection of either the first sensor component by the second sensor component or the second sensor component by the first sensor component may result in a signal being sent to a control system of the chest compression device indicating whether the first sensor component or second sensor component is detected which in turn indicates whether the guard is attached to the chest compression device. The control system may be configured to control operation of the compression belt in response to this detection. The first sensor component may be selected from a component of a magnetic sensor, a contact relay, a contact switch, a capacitive sensor, an inductive sensor, an optical sensor, and an ultrasonic sensor.

Another such combination includes a compression belt assembly for use with a chest compression device, where the compression device has a platform housing a motor and a drive spool operable to tighten the belt about the thorax of a patient, and an aperture in the housing proximate the drive spool. The compression belt assembly comprises the compression belt having a first end and a second end, with the first end being releasably attachable to the drive spool through the aperture, and a guard slidably disposed on the compression belt, and the guard is configured to occupy the aperture, and further comprises a first sensor component of an attachment sensing system. In each of the preceding configurations with an aperture, the guard may comprise a rabbeted edge configured to slide into a groove in a peripheral edge of the aperture. The first sensor component of the attachment sensing system may be selected from a component of a magnetic sensor, capacitive sensor, inductive sensor, optical sensor, or ultrasonic sensor. The first sensor component of the attachment sensing system may be a protrusion, which is interoperable with a second sensor component which is a contact switch disposed in the chest compression device or the first sensor component may comprise a magnet, which is interoperable with a second sensor component which is a magnetic sensor disposed in a chest compression device. In each of the preceding configurations with an attachment sensing system, the compression belt assembly may comprise a liner sock disposed about the belt and fixed to the guard. In each of the preceding configurations with an attachment sensing system, the guard may further comprise a hinge component for engaging a corresponding hinge component of the housing proximate the aperture, and a resilient clip for engaging a corresponding ridge of the housing proximate the aperture. In each of the preceding configurations with an attachment sensing system, the compression belt assembly may further comprise a pin configured to fit into a corresponding slot in the drive spool, and the pin may be secured to the belt first end and oriented transversely to the belt length, and have a length greater than the width of the compression belt. In each of the preceding configurations with an attachment sensing system, the guard may further comprise a slot in a first branch of the guard, a hinge component for engaging a corresponding hinge component of the housing proximate a first portion of the aperture, and a resilient clip in a second branch of the guard for engaging a corresponding ridge of the housing proximate a second portion of the aperture, whereby the guard can be rotatably attached to the housing through the hinge component, and rotationally locked to the housing with the resilient clip. In each of the preceding configurations with an attachment sensing system, the guard may comprise a slot in a first branch of the guard and a resilient clip in the second branch of the guard for engaging a corresponding ridge of the housing proximate a second portion of the aperture, whereby the guard can be slidably inserted into the housing wall and attached to the housing through the resilient component.

Another such combination includes a compression belt assembly for use with a chest compression device, comprising the compression belt compression belt having a first end and a second end, the first end being releasably attachable to the chest compression device, a guard slidably disposed on the compression belt, where the guard further comprises a proximity sensor target interoperable with a proximity sensor disposed in the chest compression device wherein the proximity sensor target is detectable by the proximity sensor, and wherein detection of the proximity sensor target by the proximity sensor indicates whether the guard is attached to the chest compression device, and wherein a control system of the chest compression device controls operation of the compression belt in response to the absence or presence of the proximity sensor target.

Another such combination includes a chest compression device comprising a platform housing a motor and a drive spool operable to tighten a compression belt about the thorax of a patient, the compression belt having a first end and a second end, with the first end being releasably attachable to the drive spool, a guard coupled to the platform, said guard being positionable in a secured position, concealing the drive spool, and an unsecured position, exposing the drive spool, a first sensor component disposed on the guard, said first sensor component interoperable with a second sensor component disposed on the platform housing, wherein detection of either the first sensor component by the second sensor component or the second sensor component by the first sensor component indicates whether the guard is in the secured position, and wherein a control system of the chest compression device controls operation of the compression belt in response to the guard being in a secured or unsecured position.

Another such combination includes a chest compression device comprising a platform for placement under the thorax of the patient, a compression belt adapted to extend over an anterior chest wall of the patient when the platform is disposed under the thorax of the patient, where the belt comprises a first pin secured to the belt, and extending transversely across the belt end, and further comprises a drive spool, having a first end and a second end, a motor operably connected to the belt through the drive spool, said motor operably connected to the first end of the drive spool, and capable of operating the drive spool repeatedly to cause the belt to tighten about the thorax of the patient and loosen about the thorax of the patient; wherein the first drive spool comprises a first spool portion having a longitudinally oriented first drive spool slot configured to receive the pin, a first flange disposed proximate a first end of the spool portion, longitudinally translatable over the first spool portion, and operable to translate to a first position along the first spool portion in which the slot is unobstructed by the flange and a second position in which the slot is partially obstructed by the flange, such that the pin is secured in the slot by the flange. The pin may be secured to the belt at a first end of the belt. These configurations which include a flange may also include a second flange disposed on the drive spool, proximate a second end of the spool portion and longitudinally fixed relative to the drive spool, said second flange obstructing a portion of the slot, whereby the pin second end, once inserted into the slot, is radially fixed within the slot at the second end of the spool. In configurations which include a first flange, the first flange may be biased toward the second position, and operable by force applied by a user to translate toward the first position. In configurations which include a drove spool slot, the drive spool may be accessible through an aperture in a lateral surface of the platform, whereby a user may insert the first pin into the slot while a patient is supported by the platform. These configurations may also include a spindle disposed proximate the spool portion, disposed lateral to and anterior to the spool portion, such that the belt travels over the spindle when the drive spool is rotated to spool the belt upon the drive spool. The configurations that include a drive spool, or a drive spool with a first spool portion, may also include a spindle disposed proximate the drive spool or spool portion, disposed lateral to and anterior to the drive spool or spool portion, such that the belt travels over the spindle when the drive spool is rotated to spool the belt upon the drive spool. The configurations that include a drive spool, or a drive spool with a first spool portion, may also be configured with the first drive spool on a first lateral side of the platform and a second drive spool disposed on a second lateral side of the platform (configured for attachment to a second end of the belt). These configurations may further include a longitudinally oriented drive spool slot configured to receive the pin. In configurations with a second drive spool, the device may include a second pin secured to a belt second end, and extending transversely across the belt second end, and the second drive spool may comprise a second spool portion having a longitudinally oriented second drive spool slot configured to receive the second pin at the second end of the belt. This configuration may also comprise a third flange disposed on the second drive spool, proximate a second end of the second spool portion and longitudinally fixed relative to the second drive spool, said third flange obstructing a portion of the second drive spool slot, whereby the second pin second end, once inserted into the second drive spool slot, is radially fixed within the second drive spool slot at the second end of the second drive spool.

Another such combination includes a chest compression device comprising the platform for placement under a thorax of the patient, the compression belt adapted to extend over an anterior chest wall of the patient when the platform is disposed under the thorax of the patient, the belt comprising a pin secured to a belt end, and extending transversely across the belt end, a drive spool characterized by a first end and a second end, a motor operably connected to the belt through the drive spool, said motor operably connected to the first end of the drive spool, and capable of operating the drive spool repeatedly to cause the belt to tighten about the thorax of the patient and loosen about the thorax of the patient. In this configuration, the drive spool may further comprise a first receiving pocket configured to receive a first end of the pin and a journal bearing disposed at the drive spool second end, said journal bearing longitudinally slidable relative to the drive spool, and a journal shaft supporting the journal bearing, said journal bearing further comprising a second receiving pocket configured to receive a second end of the pin; and the drive spool may comprise a spool portion having a longitudinally oriented slot configured to receive the pin, such that the axis of the pin is substantially parallel to the long axis of the spool portion, and said first receiving pocket, second receiving pocket and slot are coaxial such that the first pin end is aligned with the first receiving pocket and the second pin end is aligned with the second receiving pocket when the pin is disposed within the slot. In this configuration, the journal shaft may be longitudinally fixed to the housing and the journal bearing may be longitudinally slidable relative to the journal shaft, or the journal shaft may be longitudinally fixed to the journal bearing, and the journal shaft may be longitudinally slidable relative to the housing. In configurations with the journal bearing, the journal bearing may be longitudinally biased toward the drive pool, and may be longitudinally biased toward the drive spool by a spring disposed in a journal shaft receiving socket into which the journal shaft extends. In configurations with the journal bearing may further include a first flange disposed on the drive spool, proximate the spool portion, said first flange having a first radially extending channel extending from an exterior edge of the first flange to the center of the first flange, communicating with the first receiving pocket. The first radially extending channel may have a depth toward the exterior edge of the first flange greater that the depth approaching the first receiving pocket. In configurations with a first flange, the device can further comprise a second flange disposed on the journal bearing, proximate the spool portion of the drive spool, with the second flange having a second radially extending channel extending from an exterior edge of the second flange to the center of the second flange, communicating with the second receiving pocket, wherein the second channel has a depth toward the exterior edge of the flange greater that the depth approaching the second receiving pocket. The second channel may have a depth toward the exterior edge of the second flange greater that the depth approaching the second receiving pocket. In configurations with the journal bearing, the journal bearing may longitudinally biased toward the drive spool by a spring disposed in a journal shaft receiving socket into which the journal shaft extends, operable to exert a biasing force; and the biasing force may less than the insertion force necessary to force the spool open by pressing the pin downwardly into the slot while the journal bearing is biased toward the drive spool, whereby insertion force applied manually be a user is sufficient to overcome the biasing force and cause the journal bearing to slide longitudinally away from the drive spool, thereby allowing the pin second end to enter the second receiving pocket. In all configurations mentioned in this and the preceding paragraphs, the guard may be L-shaped, or provided in any convenient shape to match apertures in the housing.

### Brief Description of the Drawings

Figure 1 illustrates the CPR chest compression device installed on a patient.
Figures 2 and 3 are perspective views of the CPR chest compression device.
Figure 4 is a zoomed in side view of the CPR chest compression device, illustrating the aperture in the housing which provides for access to the drive spool for connecting the compression belt to the drive spool.
Figure 5 illustrates a see-through top view of the compression belt assembly, including a liner sock, guards, and connection pins.
Figures 6 and 7 are views of the guard.
Figures 8 and 9 illustrate the connection of the guard and the housing.
Figure 10 illustrates a second embodiment of the guard.
Figure 11 illustrates a third embodiment of the guard.
Figures 12 through 15 illustrate a drive spool and pin arrangement configured for releasable attachment of the belt to the drive spool.
Figures 16 through 19 illustrate a drive spool and pin arrangement configured for releasable attachment of the belt to the drive spool.

### Detailed Description

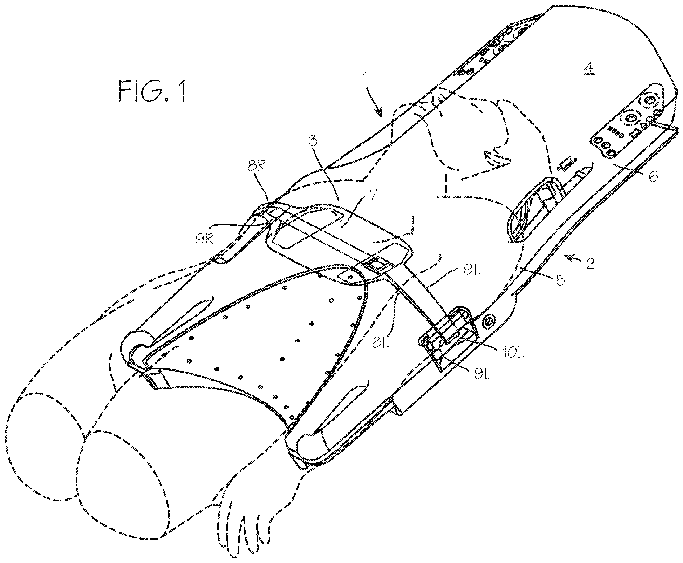

Figure 1 shows an embodiment of a chest compression device fitted on a patient 1. The chest compression device 2 applies compressions with a compression belt or band 3. The chest compression device 2 includes a belt drive platform 4 sized for placement under the thorax of the patient, upon which the patient rests during use and which provides a housing 5 for the drive train and control system for the device. The control system, provided anywhere in the device, can include a processor and may be operable to control tightening operation of the belt and to provide output on a user interface disposed on the housing. Operation of the device can be initiated and adjusted by a user through a control panel 6 and/or a display operated by the control system to provide feedback regarding the status of the device to the user.

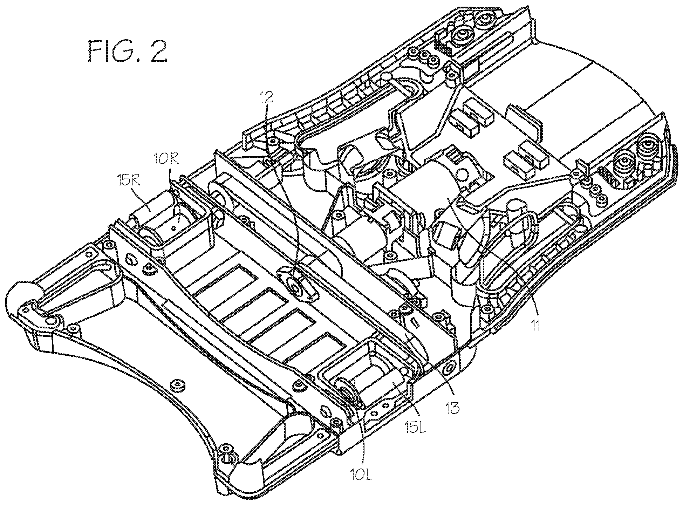

The compression belt includes a wide load-distribution section 7 at the mid-portion of the belt and left and right belt ends 8R and 8L (shown in the illustration as narrow pull straps 9R and 9L), which serve as tensioning portions which extend from the load distributing portion, posteriorly relative to the patient, to drive spools within the housing. When fitted on a patient, the load distribution section is disposed over the anterior chest wall of the patient, and the left and right belt ends extend posteriorly over the right and left axilla of the patient to connect to their respective lateral drive spools shown in Figure 2.

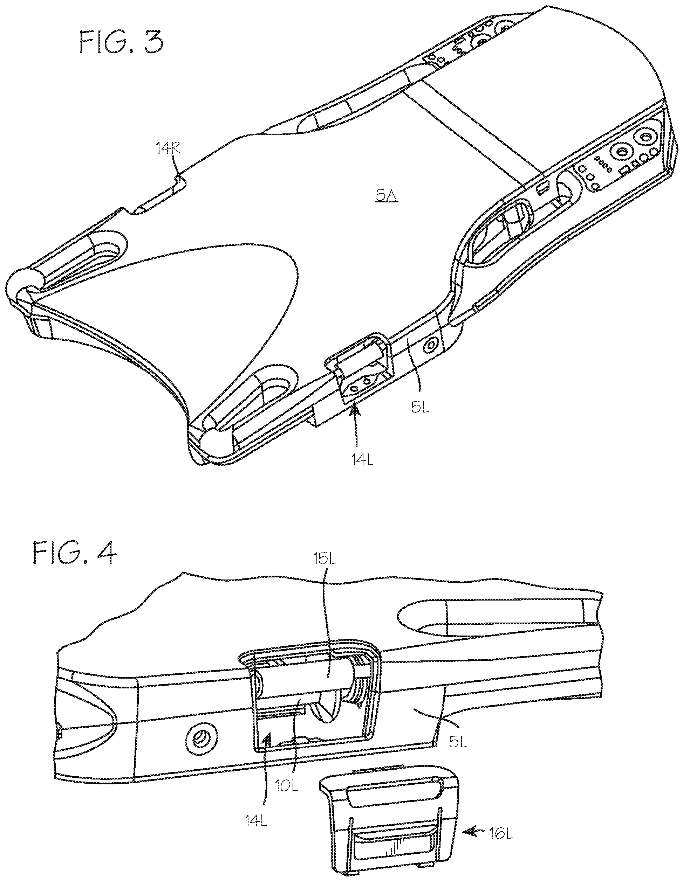

Figures 2 and 3 shows the CPR chest compression device in isolation. Figure 2 provides a view of the device with the housing anterior surface hidden. As illustrated in Figure 2, drive spools 10R and 10L are disposed laterally on either side of the housing. The belt pull straps 9R and 9L are secured to these drive spools. The lateral drive spools are in turn driven by a motor 11 also disposed within the housing, through a drive shaft 12 and drive belt 13. The belt pull straps 9R and 9L may be attached to the lateral drive spools such that, upon rotation of the drive spools, the pull straps 9R and 9L are pulled posteriorly, spooled upon the lateral spools, thereby drawing the compression belt downward to compress the chest of the patient.

Figure 3 is a perspective view of the CPR chest compression device, illustrating the apertures in the housing which provide for access to the drive spools for connecting the belt to the drive spools. Alternatively, the chest compression device may not include apertures, and other connection or fastening components may be present on the lateral or anterior surface of the device for securing the belt to the drive spools. The apertures 14R and 14L on either side of the housing are disposed proximate the drive spools. The apertures are sized to allow passage of the belt end through the housing wall for insertion into the drive spools. The apertures can extend over the housing anterior surface 5A and lateral surface 5L as shown, or over the housing anterior surface 5A alone, or the lateral surface 5L alone, to preferably provide access to the drive spools from an anterior approach or lateral approach even while a patient is disposed on the anterior surface. Spindles 15R and 15L may be provided to guide the belt ends through the apertures.

Figure 4 is a zoomed in side view of the CPR chest compression device corresponding to the view of Figure 3, illustrating the aperture in the housing which provides for access to the drive spool for connecting the compression belt to the drive spool. In this view, the aperture 14L is shown with a guard, such as machine guard 16L, configured to fit into the aperture 14L which spans anterior surface 5A and lateral surface 5L, to cover the drive spool 10L and spindle 15L.

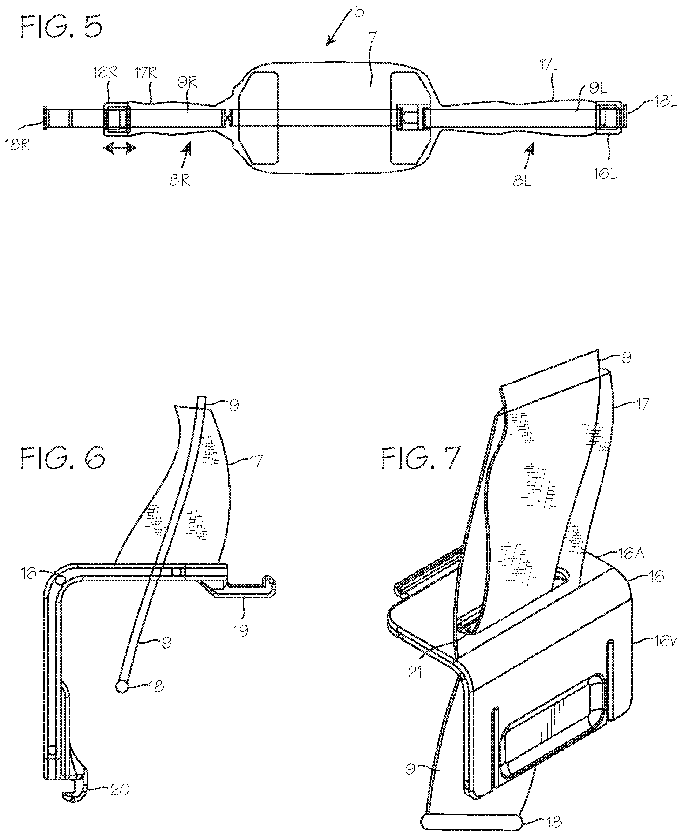

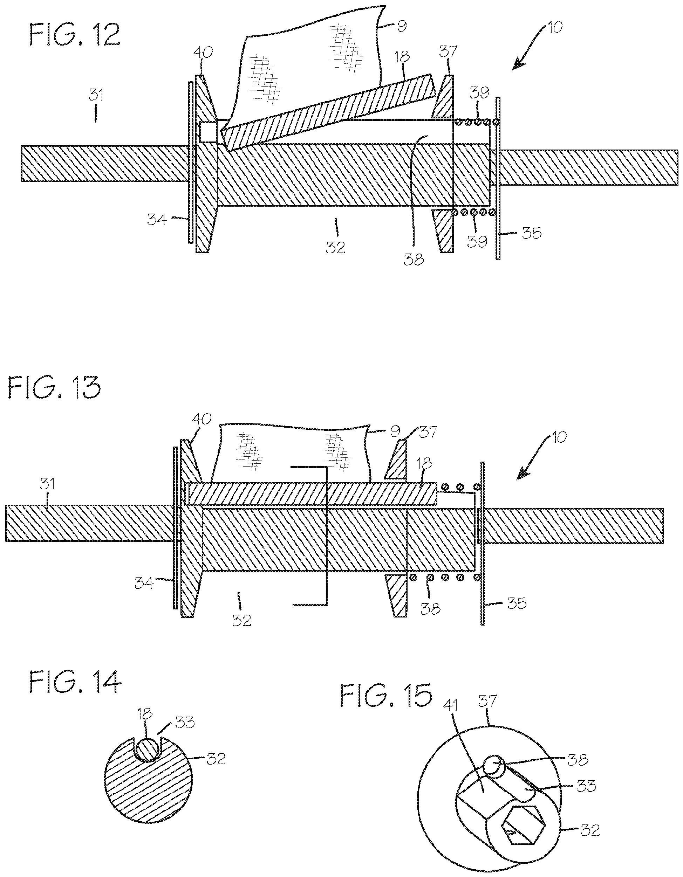

Figure 5 illustrates one embodiment of a compression belt assembly, including the pins, with machine guards, and liner socks. The compression belt 3 includes the load distribution section 7, the left and right belt ends 8R and 8L (shown in the illustration as narrow pull straps 9R and 9L) shown in Figure 1, along with machine guards 16R and 16L and liner socks 17R and 17L, and pins 18R and 18L. The guards are slidably disposed on their respective belt ends, so that the belt can move freely through the guard while the drive spool is tightening and loosening the belt during operation. The liner socks 17R and 17L are secured at their outer ends to their respective guards (16R and 16L), and fixed at their inner ends to the load distributing section 7, but loosely fitted over the belt ends/pull straps so that the belt end/pull straps may translate within the liner socks while the drive spool is tightening and loosening the belt during operation. The pins 18R and 18L are secured to the left and right belt ends 8R and 8L, respectively, with a long axis of the pins arranged perpendicularly to the long axis of the belt ends. The pins are slightly longer than the width of the compression belt, so that tips or ends of the pins extend beyond the long edge of the belt. These pins are configured to fit within slots in the drive spools, and also to be captured within the slots by flanges, as illustrated in Figures 12 to 19. The compression belt assembly may also include a buckle or fastener, disposed on a portion of the belt assembly, e.g.,at a medial portion of one of the pullstraps 9R and 9L and connecting the pull strap to the remainder of the compression belt assembly, operable to open the belt should it be necessary before or after the compression belt assembly is fitted around a patient and secured to the drive spools.

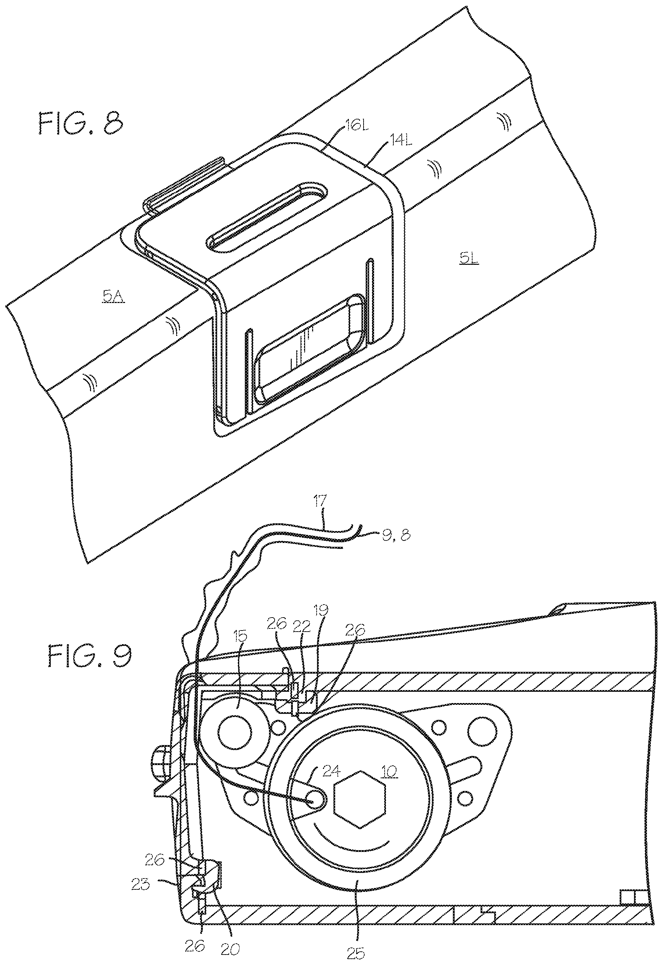

Figures 6 and 7 are views of one embodiment of a guard. Though the guards may take many forms, to match various apertures, receptacles, slots, or other connection or fastening components in the housing, the embodiments of Figures 6 and 7 are suitable for use in the housing illustrated in Figures 1 through 3. The machine guard 16 may be generally L-shaped, with a "vertical" lateral portion 16V configured to fit within the lateral side of the housing aperture and a "horizontal" anterior portion 16A configured to fit within the anterior portion of the housing aperture. Each portion may include a first fastener component configured to mate with a second fastener component on the housing (proximate the aperture). Fasteners may include a latch, clip, clamp or other fastening connection mechanism. For example, the upper fastener component 19 may be a latch such as snap-fit latching component such as non-releasing cantilever beam, configured to slip under a lug under the anterior housing surface (see Figure 9). The lower fastener component 20 may be a latch, e.g. a hook, configured to engage latch component in the form of a long ridge disposed along the inside of the lateral housing surface. As seen in the perspective view of Figure 7, the machine guard includes a slot 21, and the belt end is disposed within the slot. The belt may include a pin or other connector 18, secured to belt end. The pin and/or belt end may be disposed on the inner side of the machine guard. The machine guard may be slightly flexible, so that it may be compressed to fit into an aperture to align the snap fit component with corresponding components in the housing.

Various other configurations may be used to secure the machine guard to the housing. For example, the first fastener component may be a fixed hinge component interoperable with the hinge component proximate the aperture of the chest compression device, and the second fastener component may be a flexible fastener component, interoperable with a fixed catch component proximate the aperture of the chest compression device. The first fastener component may comprise a rigid cantilever with a lug interoperable with a first bead component proximate the aperture of the chest compression device, and the second fastener component may be a deflectable cantilever with a lug, interoperable with a second fixed bead component proximate the aperture of the chest compression device. The first fastener component may comprise a cantilever snap fit beam for securing the first portion of the machine guard over the aperture in the chest compression device disposed on the first portion, and a second fastener component disposed on the second portion, where the second fastener component is a flexible fastener component, interoperable with a fixed catch component within the housing proximate the aperture of the chest compression device. The machine guard may also be secured to the housing with rotating latches, snaps, toggle bolts, or any other means for releasably fastening the machine guard to the housing.

Figures 8 and 9 illustrate the connection of the machine guard and the housing, according to one embodiment. As shown in Figure 8, the machine guard may fit into the aperture over the drive spool and spindle. The belt end passes through the slot in the machine guard. The liner sock is secured to the anterior surface of the machine guard, and fits loosely around the belt end. As shown in the cross section of Figure 9, the machine guard fastening components 19 and 20 mate with corresponding fastening components 22 and 23 on the inside of the housing. Also as shown in Figure 9, the belt end 8 is secured within a slot 24 in the drive spool 10, and may be secured in place with a flange 25 which is disposed over the drive spool, near the outer edge of the belt end (trapping the tips of the pins that extend outside of the edge of the belt). The spindle 15 is also more clearly shown in Figure 9.

Figure 9 also shows sensors operable to detect the presence and proper installation of the guard. One or more sensors, e.g., first or second sensor components or proximity or contact sensor component pairs 26 may be fixed or otherwise coupled to or associated with the machine guard and/or housing, operable to detect proximity or contact of the machine guard-mounted sensor component with the housing mounted sensor component, and generate a signal for transmission to the control system. The control system may be operable to detect the signal corresponding to proximity or contact of the machine guard, indicating proper attachment or securement of the machine guard to the housing, and control operation of the device accordingly. For example, the control system may prevent tightening or loosening operation of the belt unless a signal corresponding to proper proximity or contact is received from the sensor. Operation of the belt is prevented unless a signal indicating proper attachment or securement of the machine guard to the housing is received by the control system. Ensuring attachment or securement of the machine guard before permitting operation of the belt provides safety for the user, e.g., by protecting a user's fingers or other body parts or clothing from coming into contact with the rotating drive spool and belt during device operation, thereby preventing potential injury to a user or damage to the device. The control system may also operate an annunciator or display to alert the user that the machine guards are or are not properly installed, e.g., providing an alarm or other alert or indicator, or a message on a user interface or display.

A variety of sensors or attachment sensors may be used, e.g., contact sensors or proximity sensors, including contact relays, contact switches, magnetic sensors, capacitive sensors inductive sensors, optical sensors, photocells, ultrasonic sensor, or any other means for sensing contact or proximity of the machine guard to the housing. Sensors may include a first sensor component and second sensor component, e.g., a sensor target and a sensing component operable to sense the presence or location of the sensor target, and either sensor component may be disposed on the guard or on the housing. A relay switch may comprise an electromagnetic switch operated by a small electric current, with a magnet or electromagnet on one structure (the housing or the guard) and a spring-loaded switch on the other structure, where proximity of the magnet or electromagnet functions to close or open the spring-loaded switch. A change in the switch position may be taken by the control system as a signal indicative of proper placement of the guard. A contact switch may comprise a switch on one structure (the housing or the guard) activated by contact with an impinging component on the other structure. For example, a reed switch disposed on the housing, operable to be closed by a protrusion on the guard, or the guard itself, when the guard is inserted properly into the aperture. Closure of the switch may be taken by the control system as a signal indicative of proper placement of the guard. A magnetic sensor may comprise a Hall effect sensor on one structure (the housing or the guard), and a magnet on the other structure. Detection of the magnetic field of the magnet may be taken by the control system as a signal indicative of proper placement of the guard. A capacitive sensor may comprise a capacitive sensor probe with a sensing electrode on one structure (the housing or the guard), and a conductive target, or a capacitive sensor probe on one structure, combined with a conductive target on the same structure on the opposite side of a channel which accommodates the other structure, operable to sense the entry of the other structure (whether conductive or non-conductive) by its effect on the capacitance measured by the capacitive sensor probe. Detection of the target may be taken by the control system as a signal indicative of proper placement of the guard. An inductive sensor may comprise a magnetic field oscillator on one structure (the housing or the guard), and a conductive target on the other structure. Detection of a change in the amplitude of the oscillator may be taken by the control system as a signal indicative of proper placement of the guard. An optical sensor may comprise photoelectric detectors and optical encoders. Optical encoders, for example, may comprise an encoder scanner on one structure (the housing or the guard), and an encoder scale on the other structure. Detection of the encoder scale by the encoder scanner may be taken by the control system as a signal indicative of proper placement of the guard. A photoelectric sensor may comprise an emitter light source on one structure (the housing or the guard), and a photodetector the other structure (or a reflector on the other structure and a photodetector on the first structure). Detection of light, or loss of detection of light, from the emitter light source by the photodetector may be taken by the control system as a signal indicative of proper placement of the guard. An ultrasonic sensor may comprise a transducer on one structure (the housing or the guard), and a reflective target on the other structure (the structure itself may constitute the target), in a through-beam or reflective arrangement. Detection of ultrasound from reflected by the target, or alteration of the ultrasound by transmission through the target may be taken by the control system as a signal indicative of proper placement of the guard.

In one example, one or more magnets may be positioned on the guard, e.g., on a machine guard fastening component 19, 20 or elsewhere on the machine guard. The magnet may be detected by a magnetic sensor positioned on or in the device housing, e.g., in a location on or near where the machine guard couples to the housing. Alternatively, a magnet may be positioned on the device housing and the magnetic sensor on the guard. In another example, a portion of the machine guard, e.g., the machine guard fastening component or first sensor component, 19 or 20, as shown in figure 6, may actuate a contact switch or second sensor component, which transmits a signal corresponding to proper attachment or securement of the machine guard to the housing, to the control system. Various contact switch arrangements may be utilized. For example, the machine guard fastening component or protrusion may actuate a rod or pin located within the housing, which rod or pin comes into contact with a contact switch, (e.g., directly or indirectly e.g., via a lever), resulting in the transmission of a signal to the control system. Alternatively, a contact switch may be positioned on the guard and a protrusion or other actuator may be positioned on the housing. In response to receiving any of the generated signals described herein, the control system may control operation of the chest compression device, e.g., by preventing or allowing motor operation to perform repeated chest compression cycles.

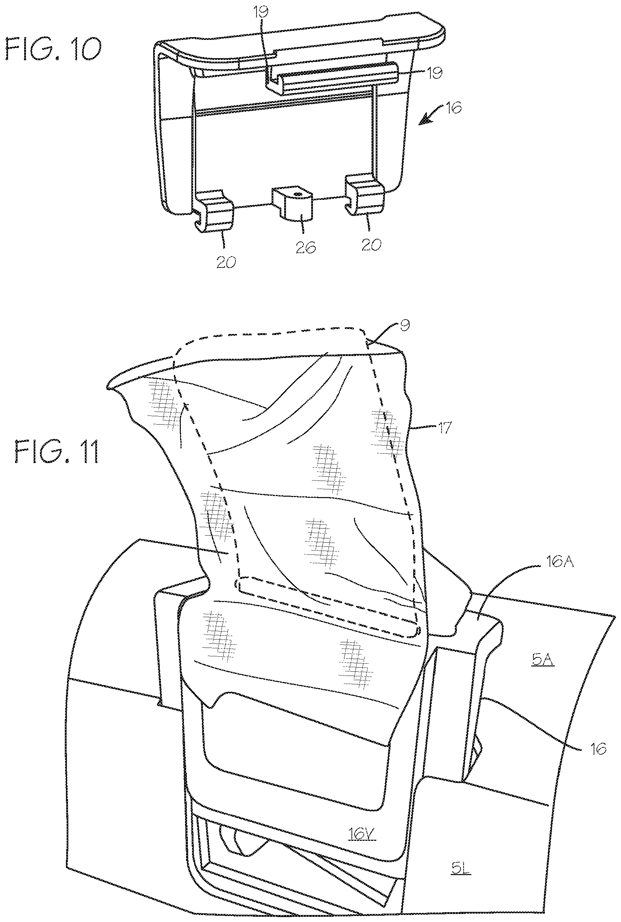

Figure 10 illustrates a second embodiment of a machine guard 16. The machine guard includes upper and lower fastener components 19 and 20. The lower fastener component 20 may include two more latches or ridges, separated by a slot or receptacle for holding a first sensor component 26. Optionally, the first sensor component may be positioned in a different location on the machine guard, to provide for optimal communication with a second sensor component located on the chest compression device or device housing.

Figure 11 illustrates a third embodiment of the machine guard. In this embodiment, the machine guard 16 is also generally L-shaped, with a "vertical" lateral portion 16L configured to fit within the lateral side of the housing aperture and a "horizontal" anterior portion 16A configured to fit within the anterior portion of the housing aperture. The belt end passes through an aperture in the "horizontal" anterior portion 16A of the machine guard. A tongue running around the edge of the "vertical" lateral portion 16V fits into a corresponding groove in the lateral wall 5L. The "horizontal" anterior portion 16A may include a fastening component configured to engage a corresponding fastening component fixed to the anterior surface of the housing. One or more sensors, as described above, may be located on the machine guard.

In another embodiment, a chest compression device having a platform housing a motor and a drive spool operable to tighten a compression belt about the thorax of a patient is provided. The compression belt includes a first end and a second end. The first end is releasably attachable to the drive spool. A guard is fixed or otherwise coupled to the platform. The guard may be positioned in a secured position, which conceals the drive spool from the user, protecting the user or other objects from contacting the drive spool during operation, or an unsecured position, which exposes the drive spool. A first sensor component is disposed on the guard and is interoperable with a second sensor component disposed on the platform housing. The first sensor component is detectable by the second sensor component or vice versa, for detection of the attachment of the guard to the chest compression device. Detection of the first or second sensor component indicates whether the guard is in the secured position, and a control system of the chest compression device can control operation of the compression belt in response to the guard being in a secured or unsecured position. By preventing operation of the chest compression device unless the guard is in a secured position where it provides a barrier between the user and the drive spool, potential injury to the user or damage to the device is prevented. As described herein, a guard may be coupled or connected to a compression belt assembly (and releasably attached to a compression device platform, to cover a drive spool or operating mechanism), or alternatively, the guard may be fixed or coupled to the platform of the chest compression device, and after attaching the belt to the drive spool, rotated or slid into a secured position, to cover the drive spool or other operating mechanism. Any of the sensors or sensor components described herein may be utilized in the above embodiments.

Figures 12 through 15 illustrate a drive spool and pin arrangement configured for releasable attachment of the belt to the drive spool. The drive spool 10 comprises a spool shaft component 31 which is operably connected to the motor drive shaft 12 through the drive belt 13 (both shown in Figure 2), and also comprises a spool portion 32 (which may be integral with the shaft, or disposed about the shaft) with a channel 33 for receiving the pin 18. The channel runs the length of the spool portion, and is long enough to receive the pin. The spool shaft component and spool portion are supported within the housing by a support walls 34 and 35. Two flanges are provided to trap the pin ends 36. A first flange 37 is slidably disposed over the spool portion, and includes an aperture 38 for receiving the pin, so that it may be translated longitudinally along the spool portion to uncover the channel sufficiently to allow insertion of the pin into the channel, and then translated longitudinally along the spool portion to trap the end of the pin within the channel. This first flange 37 may be disposed at either end of the spool shaft, and is preferably biased toward the opposite end of the spool portion, with a spring 39 disposed between the flange and the support wall 35, but can be secured in the trapping position with detents, latches or other means for holding the flange in the trapping position. The second flange 40 on the opposite end of the spool portion may be fixed longitudinally on the spool portion, or may be longitudinally translatable and biased as with the first flange. Figure 13 illustrates the drive spool and pin arrangement with the first flange in the trapping position, and held there by the spring. Figure 14 is a cross section of the spool portion, showing the pin 18 disposed with the channel 33 of the spool portion 32. The depth of the channel may be varied between the right and left side drive spools, where the drive spools are otherwise symmetrically disposed on the left and right side of the device, to account for differences in belt travel arising from different directions spooling. Figure 15 is a perspective view of a segment of the spool portion 32 illustrating two variations in the configuration. In the embodiment shown in Figure 15, the spool portion 32 includes a wrench flat 41 (a flat surface milled into the otherwise round outer contour of the spool) along the length of the spool, on the trailing side of the channel. Also, the channel is a half-pipe or partial-pipe configuration, and the flanges include circular apertures 38 extending beyond the outer diameter of the spool portion, to receive the tips of the pins.

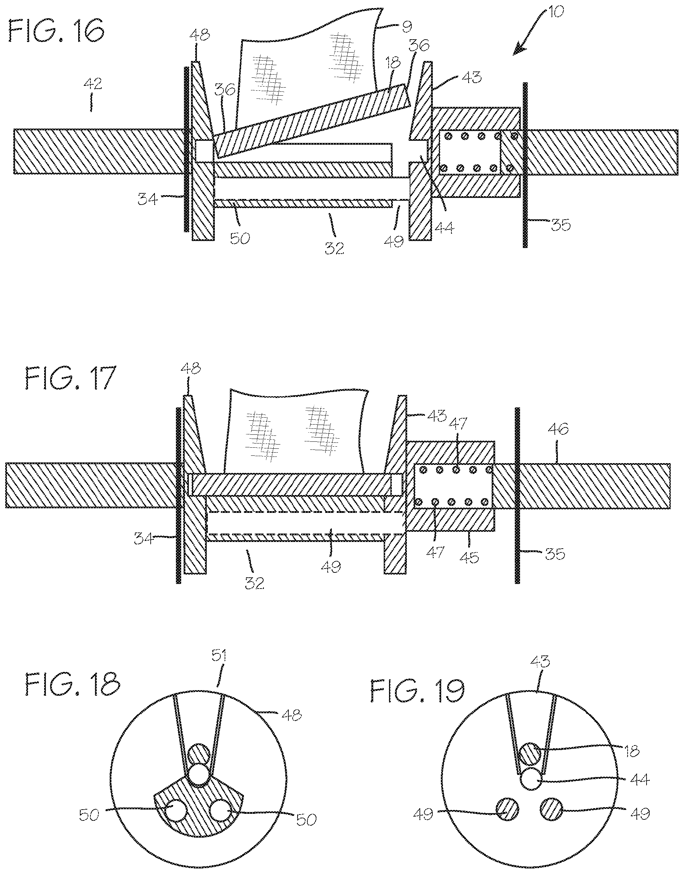

Figures 16 through 19 illustrate a drive spool and pin arrangement configured for releasable attachment of the belt to the drive spool. As in the previous figures, the drive spool 10 comprises a spool shaft component 42 which is operably connected to the motor drive shaft 12 through the drive belt 13 (both shown in Figure 2), and also comprises a spool portion 32 (which may be integral with the shaft, or disposed about the shaft) with a channel 33 for receiving the pin 18. The channel runs the length of the spool portion, and is long enough to receive the pin. The spool shaft component and spool portion are supported within the housing by support walls 34 and 35. Two flanges are provided to trap the pin ends 36. A first flange 43 is slidably disposed relative to the spool portion, so that it may be translated longitudinally relative to the spool portion to allow insertion of the pin into the channel, and then translated longitudinally along the spool portion to trap the end of the pin within the channel and the aperture 44 of the flange. This first flange 43 is disposed at the end opposite the spool shaft, and is supported on a journal bearing 45 (which is also longitudinally translatable relative to the spool portion), which in turn is supported by the journal shaft 46 supported by the support wall 35. The flange and journal bearing are biased toward the opposite end of the spool portion, with a spring 47 disposed between the flange and the support wall 35 (within or about the journal bearing), but can be secured in the trapping position with detents, latches or other means for holding the flange in the trapping position. A second flange 48 on the opposite end of the spool portion may be fixed longitudinally on the spool portion, or may be longitudinally translatable and biased as with the first flange. One or more guide rails 49 are fixed to the first flange, and extend into corresponding guide channels 50 within the spool portion, and are slidable within the guide channels. The rails and guide channels may be disposed off-center in the spool portion, or they may have non-circular cross sections, to aid in torque transfer. The pin and flange pockets may be centered in the spool portion (and the flanges) or may be disposed off-center. Figure 16 shows this embodiment with the first flange in a retracted position, which allows insertion of the pin into the channel, while Figure 17 shows the embodiment with the first flange in the trapping position, biased toward the opposite end of the spool portion by the spring. Figure 18 is a cross section of the spool portion of Figure 16, showing the location of the guide channels and pin channel, and a sloped slot 51 which may be incorporated into the flange 48 which helps guide the pin into the channel. Figure 19 is a cross section of the guide rail components, showing the location of the guide rails 49 which extend from the first flange 43, and a sloped slot 52 which may be incorporated into the first flange 43 which helps guide the pin into the channel and/or the aperture.

In use, a CPR provider will assemble the CPR chest compression device about a patient, placing the device under the patient's thorax, placing the compression belt around the patient's thorax, and inserting the pins into the drive spools, and inserting the machine guard into the apertures. The belt may be secured to the drive spools, and thereafter closed over the patient's thorax using a buckle or fastener disposed along the belt. Alternatively, the belt may be placed about the patient's thorax and thereafter secured to the drive spools. The CPR provider will then provide input to the control system of the CPR chest compression device to cause the device to perform repeated chest compression cycles.

To attach compression belt assembly to a chest compression device, the CPR provider will insert one of the pins secured to an end of the compression belt assembly through an aperture in a housing of the compression device into a receiving channel in a drive spool, forcing the sliding flange as necessary to expose the receiving channel so as to fit the pin in the channel, and then slide a machine guard (which is slidably disposed on the compression belt assembly) along the compression belt; and releasably attach the machine guard to the housing to occlude the aperture. In a symmetrical system, the CPR provider will attach both belt ends in similar fashion. Once the system is assembled about the patient, the CPR provider will operate the control system to initiate compressions. If the machine guard sensors or sensor components are used, operator initiation of compressions will cause the control system to receive analysis signals from the sensors to determine whether the machine guard is attached to the housing, and control operation of the compression belt in response to the absence or presence of the machine guard.

Referring again to Figure 3, the system may be enhanced with various features. For example, the housing may be trimmed with a gasket joining upper and lower portions of the housing to prevent fluid entry and seal the device, and the housing may be trimmed along lateral surfaces and corners with resilient bumpers. The bumpers may comprise leaf sprigs over-molded with rubber, to protect the system from mechanical shock. The surface of the device, especially the anterior surface, which supports the patient and is in contact with the patient during use, may comprise a low durometer polymer such as rubber or silicone to aid in positioning the patient while installing the system, and/or to help grip or hold the patient in position on the device. The upper surface can be configured with a depression, to aid in positioning the patient so that the load distributing portion of the belt is located over the sternum of the patient.

The several embodiments have been described in the context of a symmetrical CPR chest compression device, illustrated in embodiments which include various components in matching left and right pairs. However, the benefits of the various configurations of components may be achieved in asymmetric embodiments. For example, the benefits of the belt end configuration with the pin, machine guard slidably secured to the belt ends or pull straps, and/or the liner sock secured to the machine guard, can be obtained by applying those features to one side of the belt, while the other side of the belt is configured for attachment to its corresponding drive spool through other means. Likewise, the benefits of the drive spool configuration, with the channel for receiving the pin and the slidable flange for capturing the pin, can be applied by applying those features to one drive spool, while the other drive spool is configured for attachment to its corresponding belt end through other means.

While the preferred embodiments of the devices and methods have been described in reference to the environment in which they were developed, they are merely illustrative of the principles of the inventions. The elements of the various embodiments may be incorporated into each of the other species to obtain the benefits of those elements in combination with such other species, and the various beneficial features may be employed in embodiments alone or in combination with each other. Other embodiments and configurations may be devised without departing from the invention and the scope of the appended claims.

## Claims

1. A compression belt assembly (3) for use with a chest compression device, said compression belt assembly comprising:
a compression belt (3) comprising a first end and a second end;
a guard (16, 16R, 16L) slidably disposed on the compression belt proximate the first end, the guard comprising
a first fastener component (19) configured to releasably attach the guard (16, 16R, 16L) to a second fastener component of the chest compression device, and
a first sensor component (26) interoperable with a second sensor component of the chest compression device and configured to indicate attachment of the guard to the chest compression device.

2. The compression belt assembly of claim 1, further comprising:
a liner sock (17, 17R, 17L) disposed about the compression belt (3) and fixed to the guard (16).

3. The compression belt assembly of claim 1 or claim 2, wherein the guard (16, 16R, 16L) comprises:
a first portion (16A) having a slot (21) for slidably engaging the compression belt and comprising the first fastener component (19); and
a second portion (16V) disposed at an angle to the first portion, the second portion comprising a third fastener component (20) for securing the second portion (16V) to a fourth fastener component of the chest compression device.

4. The compression belt assembly of claim 3, wherein:
the first fastener component (19) is configured to secure the first portion (16A) over an aperture (14R, 14L) in the chest compression device; and
the third fastener component (20) is configured to secure the second portion (16V) over the aperture of the chest compression device.

5. The compression belt assembly of claim 3 or 4, wherein:
(i) the second fastener component is a hinge component (22) proximate the aperture (14R, 14L) of the chest compression device (2), the first fastener component (19) is a fixed hinge component interoperable with the hinge component , the fourth fastener component is a fixed catch component (23) proximate the aperture of the chest compression device, and the third fastener component (20) is a flexible fastener component interoperable with the fixed catch component (23); or
(ii) the second fastener component is a first beam component (22) proximate the aperture (14R, 14L) of the chest compression device (2), the first fastener component (19) comprises a rigid cantilever with a lug interoperable with the first beam component (22), the fourth fastener component is a second beam component (23) proximate the aperture of the chest compression device, and the third fastener component (20) is a deflectable cantilever with a lug, interoperable with the second beam component (23).

6. The compression belt assembly of claim 1 or claim 2 wherein:
the guard (16, 16R, 16L) comprises
a first portion (16A) having a slot (21) for slidably engaging the compression belt, and
a second portion (16V) disposed at an angle to the first portion;
the first fastener component (19) is disposed on the first portion and comprises a cantilever snap fit beam for securing the first portion (16A) over an aperture (14R, 14L) in the chest compression device (16A); and
the second fastener component (20) is disposed on the second portion (16V), said second fastener component being a flexible fastener component, interoperable with a fixed catch component (23) proximate the aperture (14R, 14L) of the chest compression device (2).

7. The compression belt assembly of any of the preceding claims, wherein the first sensor component (26) is selected from a component of a magnetic sensor, a contact relay, a contact switch, a capacitive sensor, an inductive sensor, an optical sensor, and an ultrasonic sensor.

8. The compression belt assembly of claim 1 wherein:
the compression belt (3) is configured for releasably attaching to the chest compression device;
the second sensor component comprises a proximity sensor; and
the first sensor component (26) comprises a proximity sensor target, wherein
the proximity sensor sends a signal to a control system of the chest compression device (2) indicating whether the proximity sensor target is detected which indicates whether the guard is attached to the chest compression device, and
the control system controls operation of the compression belt in response to the absence or presence of the proximity sensor target.

9. The compression belt assembly of any of the preceding claims, wherein the guard (16, 16R, 16L) comprises:
a first portion (16A) having a slot (21) for slidably engaging the compression belt; and
a second portion (16V, 16) for slidably engaging an aperture (14R, 14L) of the chest compression device.

10. The compression belt assembly of any of the preceding claims, further comprising:
a pin (18, 18R, 18L) configured to fit into a corresponding slot (24) in the chest compression device (2), said pin secured to the belt first end (8R, 8L) and oriented transversely to the belt length, said pin (24) having a length greater than the width of the compression belt.

11. The compression belt assembly of claim 1, wherein the compression belt is configured for releasably attaching to the chest compression device.

12. The compression belt assembly of claim 1, wherein the first sensor component (26) is coupled to the guard (16, 16R, 16L).

13. The compression belt assembly of claim 1, wherein:
said first sensor component (26) comprises a protrusion; and said second sensor component is a contact switch disposed in the chest compression device and interoperable with the protrusion.

14. A chest compression device (2) comprising:
a platform (4) housing a motor (11) and a drive spool (10R, 10L);
a control system; and
a compression belt assembly according to claim 1 or claim 2, wherein
the first end of the compression belt (3) is releasably attachable to the drive spool (10R, 10L), and
the drive spool (10R, 10L) is operable to tighten the compression belt (3) about the thorax of a patient;
wherein the guard (16, 16R, 16L), when coupling to the platform, is positionable in a secured position, concealing the drive spool, and an unsecured position, exposing the drive spool;
wherein the second sensor component is disposed on the platform housing (5); and
wherein detection of either the first sensor component by the second sensor component or the second sensor component by the first sensor component indicates whether the guard is in the secured position, wherein the control system controls operation of the compression belt in response to the guard being in the secured position or the unsecured position.

15. The chest compression device of claim 14, wherein the compression belt assembly (3) further comprises a pin configured to fit into a corresponding slot in the drive spool (10R, 10L), said pin secured to first end (8R, 8L) of the belt and oriented transversely to the belt length, said pin having a length greater than the width of the compression belt.

## Patentansprüche

1. Kompressionsgurtanordnung (3) zur Verwendung mit einem Brustkompressionsgerät, wobei die Kompressionsgurtanordnung Folgendes umfasst:
einen Kompressionsgurt (3), der ein erstes Ende und ein zweites Ende umfasst;
einen Schutz (16, 16R, 16L), der verschiebbar auf dem Kompressionsgurt in der Nähe des ersten Endes angeordnet ist, wobei der Schutz Folgendes umfasst:
eine erste Befestigungskomponente (19), die dazu konfiguriert ist, den Schutz (16, 16R, 16L) lösbar an einer zweiten Befestigungskomponente des Brustkompressionsgeräts zu befestigen, und
eine erste Sensorkomponente (26), die mit einer zweiten Sensorkomponente des Brustkompressionsgeräts zusammenwirkt und so konfiguriert ist, dass sie die Befestigung des Schutzes am Brustkompressionsgerät anzeigt.

2. Kompressionsgurtanordnung nach Anspruch 1, weiterhin umfassend:
eine Innensocke (17, 17R, 17L), die um den Kompressionsgurt (3) herum angeordnet und am Schutz (16) befestigt ist.

3. Kompressionsgurtanordnung nach Anspruch 1 oder Anspruch 2, wobei der Schutz (16, 16R, 16L) Folgendes umfasst:
einen ersten Abschnitt (16A), der einen Schlitz (21) zum gleitenden Eingriff in den Kompressionsgurt aufweist und die erste Befestigungskomponente (19) umfasst; und
einen zweiten Abschnitt (16V), der in einem Winkel zum ersten Abschnitt angeordnet ist, wobei der zweite Abschnitt eine dritte Befestigungskomponente (20) zum Befestigen des zweiten Abschnitts (16V) an einer vierten Befestigungskomponente des Brustkompressionsgeräts umfasst.

4. Kompressionsgurtanordnung nach Anspruch 3, wobei:
die erste Befestigungskomponente (19) so konfiguriert ist, dass sie den ersten Abschnitt (16A) über einer Öffnung (14R, 14L) im Brustkompressionsgerät befestigt; und
die dritte Befestigungskomponente (20) so konfiguriert ist, dass sie den zweiten Abschnitt (16V) über der Öffnung des Brustkompressionsgeräts befestigt.

5. Kompressionsgurtanordnung nach Anspruch 3 oder 4, wobei:
(i) die zweite Befestigungskomponente eine Scharnierkomponente (22) in der Nähe der Öffnung (14R, 14L) des Brustkompressionsgeräts (2) ist, die erste Befestigungskomponente (19) eine feste Scharnierkomponente ist, die mit der Scharnierkomponente zusammenwirken kann, die vierte Befestigungskomponente eine feste Rastkomponente (23) in der Nähe der Öffnung des Brustkompressionsgeräts ist und die dritte Befestigungskomponente (20) eine flexible Befestigungskomponente ist, die mit der festen Rastkomponente (23) zusammenwirken kann; oder
(ii) die zweite Befestigungskomponente eine erste Balkenkomponente (22) in der Nähe der Öffnung (14R, 14L) des Brustkompressionsgeräts (2) ist, die erste Befestigungskomponente (19) einen starren Ausleger mit einer Lasche umfasst, die mit der ersten Balkenkomponente (22) zusammenwirken kann, die vierte Befestigungskomponente eine zweite Balkenkomponente (23) in der Nähe der Öffnung des Brustkompressionsgeräts ist und die dritte Befestigungskomponente (20) ein auslenkbarer Ausleger mit einer Lasche ist, der mit der zweiten Balkenkomponente (23) zusammenwirken kann.

6. Kompressionsgurtanordnung nach Anspruch 1 oder Anspruch 2, wobei:
der Schutz (16, 16R, 16L) einen ersten Abschnitt (16A) mit einem Schlitz (21) zum gleitenden Eingriff in den Kompressionsgurt umfasst, und
einen zweiten Abschnitt (16V), der in einem Winkel zum ersten Abschnitt angeordnet ist;
die erste Befestigungskomponente (19) auf dem ersten Abschnitt angeordnet ist und einen freitragenden Schnappbefestigungsbalken zum Befestigen des ersten Abschnitts (16A) über einer Öffnung (14R, 14L) in der Brustkompressionsvorrichtung (16A) umfasst; und
die zweite Befestigungskomponente (20) auf dem zweiten Abschnitt (16V) angeordnet ist, wobei die zweite Befestigungskomponente eine flexible Befestigungskomponente ist, die mit einer festen Rastkomponente (23) in der Nähe der Öffnung (14R, 14L) des Brustkompressionsgeräts (2) zusammenwirken kann.

7. Kompressionsgurtanordnung nach einem der vorhergehenden Ansprüche, wobei die erste Sensorkomponente (26) aus einer Komponente eines Magnetsensors, eines Kontaktrelais, eines Kontaktschalters, eines kapazitiven Sensors, eines induktiven Sensors, eines optischen Sensors und eines Ultraschallsensors.

8. Kompressionsgurtanordnung nach Anspruch 1, wobei:
der Kompressionsgurt (3) zur lösbaren Befestigung am Brustkompressionsgerät konfiguriert ist;
die zweite Sensorkomponente einen Näherungssensor umfasst; und
die erste Sensorkomponente (26) ein Näherungssensorziel umfasst, wobei
der Näherungssensor ein Signal an ein Steuersystem des Brustkompressionsgeräts (2) sendet, das angibt, ob das Ziel des Näherungssensors erkannt wurde, was anzeigt,
ob der Schutz am Brustkompressionsgerät befestigt ist, und
das Steuersystem den Betrieb des Kompressionsgurts als Reaktion auf die Abwesenheit oder Anwesenheit des Näherungssensorziels steuert.

9. Kompressionsgurtanordnung nach einem der vorhergehenden Ansprüche, wobei der Schutz (16, 16R, 16L) Folgendes umfasst:
einen ersten Abschnitt (16A) mit einem Schlitz (21) zum gleitenden Eingriff in den Kompressionsgurt; und
einen zweiten Abschnitt (16V, 16) zum gleitenden Eingriff in eine Öffnung (14R, 14L) des Brustkompressionsgeräts.

10. Kompressionsgurtanordnung nach einem der vorhergehenden Ansprüche, weiterhin umfassend:
einen Stift (18, 18R, 18L), der so konfiguriert ist,
dass er in einen entsprechenden Schlitz (24) im Brustkompressionsgerät (2) passt, wobei der Stift am ersten Ende (8R, 8L) des Gurts befestigt und quer zur Gurtlänge ausgerichtet ist, wobei der Stift (24) eine Länge aufweist, die größer als die Breite des Kompressionsgurts ist.

11. Kompressionsgurtanordnung nach Anspruch 1, wobei der Kompressionsgurt zur lösbaren Befestigung am Brustkompressionsgerät konfiguriert ist.

12. Kompressionsgurtanordnung nach Anspruch 1, wobei die erste Sensorkomponente (26) mit dem Schutz (16, 16R, 16L) gekoppelt ist.

13. Kompressionsgurtanordnung nach Anspruch 1, wobei:
die erste Sensorkomponente (26) einen Vorsprung umfasst; und die zweite Sensorkomponente ein Kontaktschalter ist, der im Brustkompressionsgerät angeordnet ist und mit dem Vorsprung zusammenwirken kann.

14. Brustkompressionsgerät (2), umfassend:
eine Plattform (4), die einen Motor (11) und eine Antriebsspule (10R, 10L) beherbergt;
ein Steuersystem; und
eine Kompressionsgurtanordnung nach Anspruch 1 oder Anspruch 2, wobei
das erste Ende des Kompressionsgurts (3) lösbar an der Antriebsspule (10R, 10L) befestigbar ist, und
die Antriebsspule (10R, 10L) dazu dient, den Kompressionsgurt (3) um den Brustkorb eines Patienten zu spannen;
wobei der Schutz (16, 16R, 16L) beim Ankoppeln an die Plattform in eine gesicherte Position, die die Antriebsspule verdeckt, und in eine ungesicherte Position, die die Antriebsspule freilegt, positionierbar ist;
wobei die zweite Sensorkomponente am Plattformgehäuse (5) angeordnet ist; und
wobei die Erkennung entweder der ersten Sensorkomponente durch die zweite Sensorkomponente oder
der zweiten Sensorkomponente durch die erste Sensorkomponente anzeigt, ob sich der Schutz in der gesicherten Position befindet, wobei das Steuersystem den Betrieb des Kompressionsgurts als Reaktion darauf steuert, ob sich der Schutz in der gesicherten Position oder in der ungesicherten Position befindet.

15. Brustkompressionsgerät nach Anspruch 14, wobei die Kompressionsgurtanordnung (3) ferner einen Stift umfasst, der so konfiguriert ist, dass er in einen entsprechenden Schlitz in der Antriebsspule (10R, 10L) passt, wobei der Stift am ersten Ende (8R, 8L) des Gurts befestigt und quer zur Gurtlänge ausgerichtet ist, wobei der Stift eine Länge aufweist, die größer als die Breite des Kompressionsgurts ist.

## Revendications

1. Ensemble de courroie de compression (3) destiné à être utilisé avec un dispositif de compression thoracique, ledit ensemble de courroie de compression comprenant :
une courroie de compression (3) comprenant une première extrémité et une seconde extrémité ;
une protection (16, 16R, 16L) disposée de manière coulissante sur la courroie de compression à proximité de la première extrémité, la protection comprenant
un premier composant de fixation (19) configuré pour fixer de manière amovible la protection (16, 16R, 16L) à un deuxième composant de fixation du dispositif de compression thoracique, et
un premier composant capteur (26) interopérable avec un second composant capteur du dispositif de compression thoracique et configuré pour indiquer la fixation de la protection au dispositif de compression thoracique.

2. Ensemble de courroie de compression selon la revendication 1, comprenant en outre :
une chaussette de doublure (17, 17R, 17L) disposée autour de la courroie de compression (3) et fixée à la protection (16).

3. Ensemble de courroie de compression selon la revendication 1 ou la revendication 2, dans lequel la protection (16, 16R, 16L) comprend :
une première partie (16A) ayant une fente (21) pour la mise en prise coulissante de la courroie de compression et comprenant le premier composant de fixation (19) ; et
une seconde partie (16V) disposée selon un angle par rapport à la première partie, la seconde partie comprenant un troisième composant de fixation (20) pour fixer la seconde partie (16V) à un quatrième composant de fixation du dispositif de compression thoracique.

4. Ensemble de courroie de compression selon la revendication 3, dans lequel :
le premier composant de fixation (19) est configuré pour fixer la première partie (16A) sur une ouverture (14R, 14L) dans le dispositif de compression thoracique ; et
le troisième composant de fixation (20) est configuré pour fixer la seconde partie (16V) sur l'ouverture du dispositif de compression thoracique.

5. Ensemble de courroie de compression selon la revendication 3 ou 4, dans lequel :
(i) le deuxième composant de fixation est un composant d'articulation (22) à proximité de l'ouverture (14R, 14L) du dispositif de compression thoracique (2), le premier composant de fixation (19) est un composant d'articulation fixe interopérable avec le composant d'articulation, le quatrième composant de fixation est un composant de verrouillage fixe (23) à proximité de l'ouverture du dispositif de compression thoracique, et le troisième composant de fixation (20) est un composant de fixation flexible interopérable avec le composant de verrouillage fixe (23) ; ou
(ii) le deuxième composant de fixation est un premier composant de montant (22) à proximité de l'ouverture (14R, 14L) du dispositif de compression thoracique (2), le premier composant de fixation (19) comprend un porte-à-faux rigide doté d'un ergot interopérable avec le premier composant de montant (22), le quatrième composant de fixation est un second composant de montant (23) à proximité de l'ouverture du dispositif de compression thoracique, et le troisième composant de fixation (20) est un porte-à-faux orientable doté d'un ergot, interopérable avec le second composant de montant (23).

6. Ensemble de courroie de compression selon la revendication 1 ou la revendication 2, dans lequel :
la protection (16, 16R, 16L) comprend
une première partie (16A) ayant une fente (21) pour la mise en prise coulissante de la courroie de compression, et
une seconde partie (16V) disposée selon un angle par rapport à la première partie ;
le premier composant de fixation (19) est disposé sur la première partie et comprend un montant à encliquetage en porte-à-faux pour fixer la première partie (16A) sur une ouverture (14R, 14L) du dispositif de compression thoracique (16A) ; et
le deuxième composant de fixation (20) est disposé sur la seconde partie (16V), ledit deuxième composant de fixation étant un composant de fixation flexible, interopérable avec un composant de verrouillage fixe (23) à proximité de l'ouverture (14R, 14L) du dispositif de compression thoracique (2).

7. Ensemble de courroie de compression selon l'une quelconque des revendications précédentes, dans lequel le premier composant capteur (26) est choisi parmi un composant d'un capteur magnétique, d'un relais de contact, d'un commutateur de contact, d'un capteur capacitif, d'un capteur inductif, d'un capteur optique, et d'un capteur à ultrasons.

8. Ensemble de courroie de compression selon la revendication 1, dans lequel :
la courroie de compression (3) est configurée pour être fixée de manière amovible au dispositif de compression thoracique ;
le second composant capteur comprend un capteur de proximité ; et
le premier composant capteur (26) comprend une cible de capteur de proximité, dans lequel
le capteur de proximité envoie un signal à un système de commande du dispositif de compression thoracique (2) indiquant si la cible du capteur de proximité est détectée, ce qui indique si la protection est fixée au dispositif de compression thoracique, et
le système de commande commande le fonctionnement de la courroie de compression en réponse à l'absence ou à la présence de la cible du capteur de proximité.

9. Ensemble de courroie de compression selon l'une quelconque des revendications précédentes, dans lequel la protection (16, 16R, 16L) comprend :
une première partie (16A) ayant une fente (21) pour la mise en prise coulissante de la courroie de compression ; et
une seconde partie (16V, 16) destinée à être mise en prise de manière coulissante dans une ouverture (14R, 14L) du dispositif de compression thoracique.

10. Ensemble de courroie de compression selon l'une quelconque des revendications précédentes, comprenant en outre :
une tige (18, 18R, 18L) configurée pour s'insérer dans une fente correspondante (24) du dispositif de compression thoracique (2), ladite tige étant fixée à la première extrémité de la courroie (8R, 8L) et orientée transversalement à la longueur de la courroie, ladite tige (24) ayant une longueur supérieure à la largeur de la courroie de compression.

11. Ensemble de courroie de compression selon la revendication 1, dans lequel la courroie de compression est configurée pour être fixée de manière amovible au dispositif de compression thoracique.

12. Ensemble de courroie de compression selon la revendication 1, dans lequel le premier composant capteur (26) est couplé à la protection (16, 16R, 16L).

13. Ensemble de courroie de compression selon la revendication 1, dans lequel :
ledit premier composant capteur (26) comprend une saillie ; et ledit second composant capteur est un commutateur de contact disposé dans le dispositif de compression thoracique et interopérable avec la saillie.

14. Dispositif de compression thoracique (2) comprenant :
une plate-forme (4) logeant un moteur (11) et une bobine d'entraînement (10R, 10L) ;
un système de commande ; et
un ensemble de courroie de compression selon la revendication 1 ou la revendication 2, dans lequel
la première extrémité de la courroie de compression (3) peut être fixée de manière amovible à la bobine d'entraînement (10R, 10L), et
la bobine d'entraînement (10R, 10L) peut fonctionner pour serrer la courroie de compression (3) autour du thorax d'un patient ;
dans lequel la protection (16, 16R, 16L), lorsqu'elle est couplée à la plate-forme, peut être positionnée dans une position sécurisée, dissimulant la bobine d'entraînement, et dans une position non sécurisée, exposant la bobine d'entraînement ;
dans lequel le second composant capteur est disposé sur le boîtier de plate-forme (5) ; et
dans lequel la détection soit du premier composant capteur par le second composant capteur, soit du second composant capteur par le premier composant capteur, indique si la protection est dans la position sécurisée, dans lequel le système de commande commande le fonctionnement de la courroie de compression en réponse au fait que la protection est en position sécurisée ou en position non sécurisée.

15. Dispositif de compression thoracique selon la revendication 14, dans lequel l'ensemble de courroie de compression (3) comprend en outre une tige configurée pour s'insérer dans une fente correspondante dans la bobine d'entraînement (10R, 10L), ladite tige étant fixée à la première extrémité (8R, 8L) de la courroie et orientée transversalement à la longueur de la courroie, ladite tige ayant une longueur supérieure à la largeur de la courroie de compression.
